# EUROPÄISCHE PATENTSCHRIFT

(11) **EP 1 798 086 B1**
(45) Veröffentlichungstag und Bekanntmachung des Hinweises auf die Patenterteilung: **25.04.2012**
(21) Anmeldenummer: 06025313.5
(22) Anmeldetag: 07.12.2006
(51) Int. Cl.: B60J 7/05

(54) **Schiebedachsystem, insbesondere für ein Kraftfahrzeug**
Sliding roof system, particularly for motor vehicle
Système de toit coulissant, en particulier pour véhicule automobile

(30) Priorität: 15.12.2005 DE 102005060065
(43) Veröffentlichungstag der Anmeldung: 20.06.2007
(73) Patentinhaber: Roof Systems Germany GmbH, 63128 Dietzenbach (DE)
(72) Erfinder: Oechel, Holger, 60388 Frankfurt/Main (DE); Vogel, Stefan, 63683 Ortenberg (DE); Kunkel, Stefan, 63741 Aschaffenburg (DE)
(74) Vertreter: Prinz & Partner

(56) Entgegenhaltungen:
- WO-A1-00/47435
- DE-A1- 3 146 698
- GB-A- 2 131 871
- US-A- 5 879 049

## Beschreibung

Die Erfindung betrifft ein Schiebedachsystem für ein Kraftfahrzeug nach dem Oberbegriff des Anspruchs 1.

Ein solches Schiebedachsystem ist beispielsweise in der US 5,879,049 A1 gezeigt.

Bei einem solchen Schiebedachsystem kann der Deckel mittels des Deckelträgers und des Schlittens in eine sogenannte Lüfterstellung gebracht werden, in der die in der Fahrtrichtung des Kraftfahrzeugs betrachtet hintere Kante des Deckels nach außen ausgestellt ist. Dadurch ist ein Spalt zwischen der hinteren Kante des Deckels und dem Rand der normalerweise vom Deckel verschlossenen Öffnung im Fahrzeugdach gebildet; dieser Spalt dient zur Belüftung des Innenraums. Bei herkömmlichen Schiebedachsystemen, bei denen der Deckel in eine Lüfterstellung verschwenkt werden kann, ist der Deckelträger am vorderen Lagerblock mittels einer stationären Schwenkachse angelenkt. Der Deckel wird also, wenn der Deckelträger nach außen ausgestellt wird, um eine Schwenkachse am vorderen Lagerblock verschwenkt. Da der Lagerblock, aufgrund der konstruktiven Gegebenheiten, üblicherweise unterhalb und hinter der vorderen Kante des Deckels angeordnet ist, führt die Schwenkbewegung des Deckelträgers hin zur Lüfterstellung dazu, daß die vordere Kante des Deckels nach vorne und unten verschwenkt wird. Dies führt dazu, daß eine Dichtung, die im Bereich des Spalts zwischen dem Deckel und dem gegenüberliegenden Randabschnitt des Fahrzeugdaches abdichtet, zusammengedrückt und auf Scherung belastet wird. Dies erzeugt unerwünschte Geräusche und unerwünschte Reibung. Außerdem führt diese Anordnung der Schwenkachse dazu, daß bei einem Deckel, der in der Draufsicht eine gewölbte Vorderkante hat, die seitlichen Bereiche der Vorderkante nach oben geschoben werden, wenn der Deckel in die Lüfterstellung gebracht wird. Dies ist unerwünscht.

Die Aufgabe der Erfindung besteht darin, ein Schiebedachsystem der eingangs genannten Art dahingehend weiterzubilden, daß unerwünschte Geräusche und unerwünschte Reibung vermieden werden, wenn der Deckel aus einer geschlossenen Stellung in eine Lüfterstellung bewegt wird, und daß unerwünschte Verschiebungen der Vorderkante des Deckels vermieden werden.

Zur Lösung dieser Aufgabe ist erfindungsgemäß vorgesehen, daß der virtuelle Schwenkpunkt oberhalb des Deckels liegt. Der virtuelle Schwenkpunkt oder anders ausgedrückt der Momentanpol der Bewegung des Deckels kann je nach den Anforderungen so gewählt werden, daß die Dichtung nicht in unerwünschter Weise zusammengedrückt oder auf Scherung belastet wird. Dadurch können unerwünschte Geräusche und unerwünschte Reibungen verhindert werden. Auch kann verhindert werden, daß bei einem Deckel mit gekrümmter Vorderkante die äußeren Bereiche nach oben verschoben werden, wenn der Deckel in die Lüfterstellung gebracht wird. Der oberhalb des Deckels liegende virtuelle Schwenkpunkt führt dazu, daß die Vorderkante des Deckels, wenn der Deckel aus der geschlossenen Stellung in eine Lüfterstellung verschwenkt wird, tendenziell nach hinten verschwenkt wird, sich also problemlos von der Dichtung löst.

Gemäß einer Ausführungsform ist vorgesehen, daß der vordere Lagerblock verschiebbar in der Führungsschiene angeordnet ist, daß ein hinterer Lagerblock vorgesehen ist, der mit dem Deckelträger gekoppelt und ebenfalls in der Führungsschiene verschiebbar ist, und daß ein Rasthaken vorgesehen ist, der den hinteren Lagerblock ortsfest in der Führungsschiene festlegen kann. Die Verwendung von verschiebbar in der Führungsschiene angeordneten Lagerblöcken ermöglicht es, den Deckel nicht nur in eine Lüfterstellung zu bewegen, sondern auch in eine vollständig geöffnete Stellung, in welcher er eine Dachöffnung im Fahrzeugdach vollständig oder wenigstens im wesentlichen vollständig freigibt.

Vorteilhafte Ausgestaltungen der Erfindung ergeben sich aus den Unteransprüchen. Die Erfindung wird nachfolgend anhand einer bevorzugten Ausführungsform beschrieben, die in den beigefügten Zeichnungen dargestellt ist. In diesen zeigen:
- Figur 1 eine perspektivische Ansicht eines Fahrzeugdaches mit einem Schiebedachsystem;
- Figur 2 in einem schematischen Schnitt ein Schiebedachsystem, wobei sich der Deckel in einer geschlossenen Stellung befindet;
- Figur 3 das Schiebedachsystem von Figur 2, wobei der Deckel geringfügig hin zu einer Lüsterstellung verschwenkt wurde;
- Figur 4 das Schiebedachsystem von Figur 3, wobei der Deckel weiter zur Lüfterstellung hin verschwenkt wurde;
- Figur 5 das Schiebedachsystem von Figur 4, wobei sich der Deckel in der Lüfterstellung befindet;

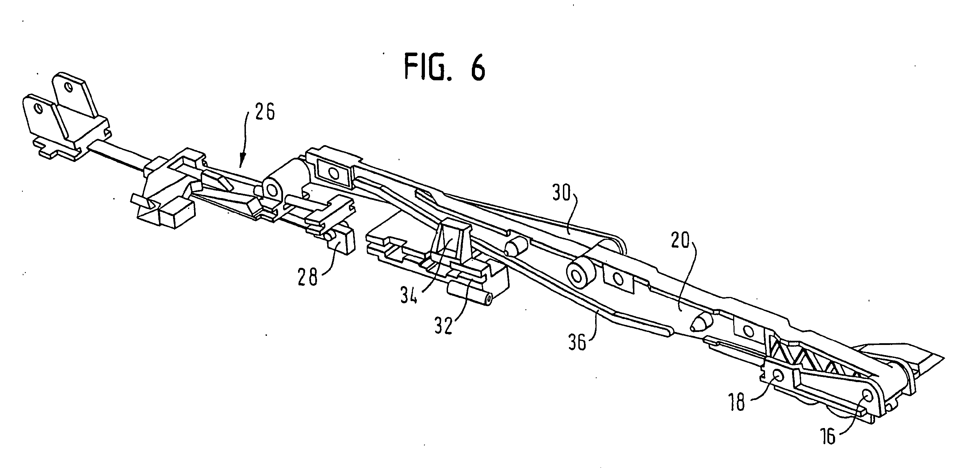

- Figur 6 in einer schematischen, perspektivischen Ansicht die verschiedenen Bauteile des Schiebedachsystems, wobei zur besseren Übersichtlichkeit die Führungsschiene und der Deckel weggelassen wurden;

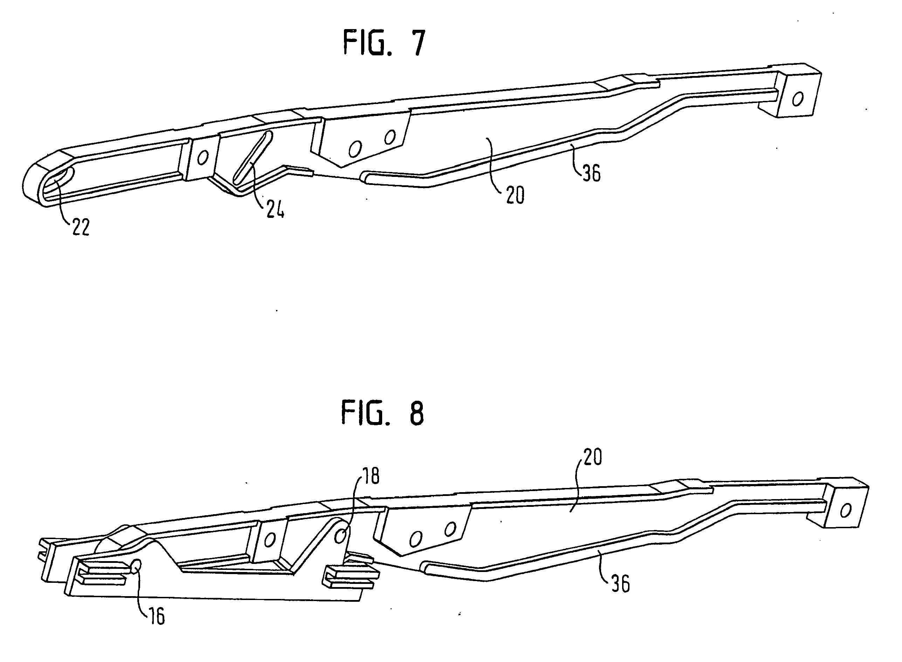

- Figur 7 in einer perspektivischen Ansicht den Deckelträger des Schiebedachsystems;
- Figur 8 in einer perspektivischen Ansicht eine aus dem Deckelträger und dem vorderen Lagerblock gebildete Baugruppe;
- Figur 9 die Baugruppe von Figur 8, wobei der vordere Lagerblock durchsichtig dargestellt ist; und
- Figur 10 in einer perspektivischen Ansicht die in eine Führungsschiene eingesetzte Baugruppe von Figur 9.

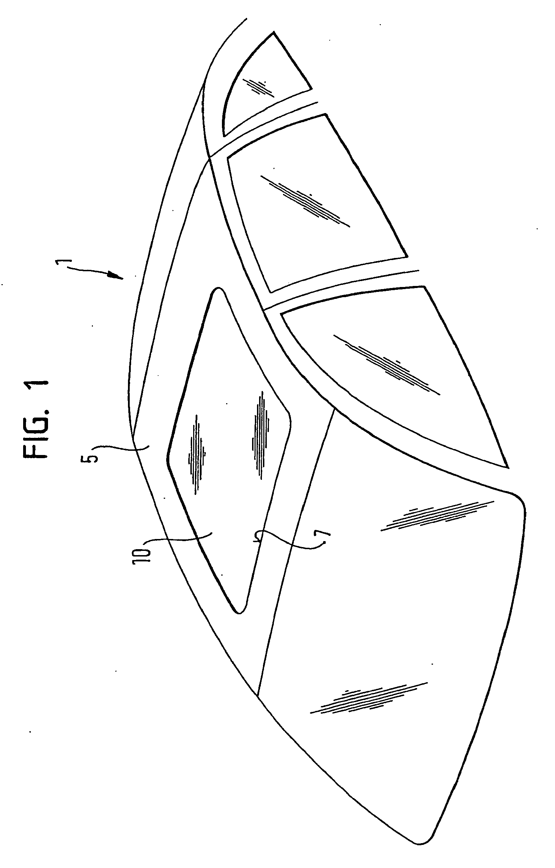

In Figur 1 ist schematisch ein Fahrzeugdach 1 gezeigt, welches eine feste Dachhaut 5 aufweist. In der Dachhaut 5 ist eine Öffnung ausgebildet, deren Rand mit dem Bezugszeichen 7 bezeichnet ist. Innerhalb der Öffnung ist ein Deckel 10 angeordnet, der aus Blech, Kunststoff, Glas oder einem anderen geeigneten Material bestehen kann. Wenn sich der Deckel 10 in seiner geschlossenen Stellung befindet, verschließt er die Öffnung im Fahrzeugdach 1 dicht. Ausgehend von der in Figur 1 gezeigten, geschlossenen Stellung kann der Deckel 10 in an sich bekannter Weise in eine Lüfterstellung gebracht werden, die sich dadurch auszeichnet, daß die hintere Kante des Deckels 10 nach außen ausgestellt ist, so daß ein Schlitz zwischen dem Deckel 10 und dem Rand der Öffnung im Fahrzeugdach 1 gebildet ist, durch den der Innenraum des Fahrzeugs belüftet werden kann. Der Deckel 10 kann auch in eine mehr oder weniger geöffnete Stellung verstellt werden, in welcher er in Längsrichtung des Fahrzeugs verschoben ist, so daß die Öffnung im Fahrzeugdach 1 freigegeben ist.

Soweit zur Beschreibung der Erfindung Begriffe wie vorne, hinten, oben, unten, etc. verwendet werden, werden auf die üblichen Bezeichnungen an einem Fahrzeug abgestellt. "Vorne" bezeichnet also die Richtung, in die sich das Fahrzeug normalerweise bei Vorwärtsfahrt bewegt.

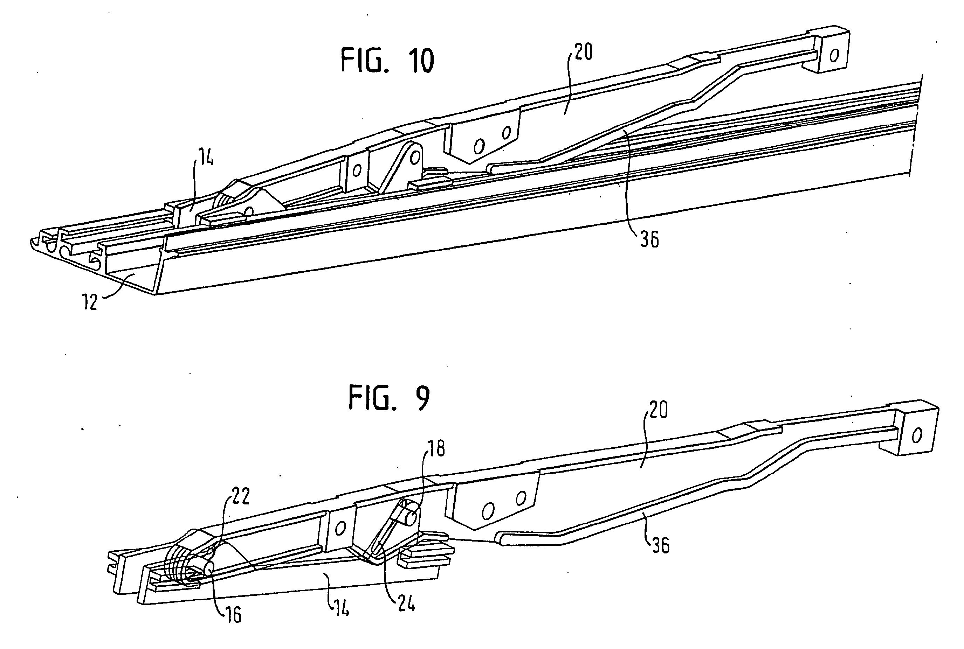

Der Deckel 10 ist Teil eines Schiebedachsystems, welches zwei Führungsschienen 12 aufweist, die sich etwa in der Längsrichtung des Fahrzeugs parallel zu den Längsrändern der Öffnung im Fahrzeugdach 1 erstrecken. Eine Führungsschiene ist in Figur 10 gezeigt. In jeder Führungsschiene ist ein vorderer Lagerblock 14 angeordnet, der in der Längsrichtung in der Führungsschiene verschiebbar ist. Jeder Lagerblock 14 weist zwei Führungsbolzen 16, 18 auf, die sich quer zur Längsrichtung der Führungsschienen erstrecken.

An jedem vorderen Lagerblock 14 ist ein Deckelträger 20 schwenkbar angebracht. Der Deckelträger 20 trägt den Deckel 10. Zur Verbindung mit dem vorderen Lagerblock 14 ist der Deckelträger 20 mit einer vorderen Führungskulisse 22 und einer hinteren Führungskulisse 24 versehen. In die vordere Führungskulisse greift der Führungsbolzen 16 des vorderen Lagerblocks 14 ein, und in die hintere Führungskulisse 24 greift der Führungsbolzen 18 ein. Die Führungsbolzen zusammen mit den Führungskulissen bilden jeweils eine Kulissenführung. Die vordere Führungskulisse 22 ist gekrümmt ausgeführt und erstreckt sich über einen kleinen Winkelbereich. Der Krümmungsmittelpunkt der Führungskulisse 22 liegt oberhalb des Deckels 10. Die Führungskulisse 22 erstreckt sich geradlinig, wobei sie, von vorne nach hinten betrachtet, schräg von unten nach oben verläuft. Allgemein ausgedrückt verlaufen beide Führungskulissen 22, 24 schräg nach hinten oben. Grundsätzlich können die Kulissenführungen auch durch im Lagerblock ausgebildete Führungskulissen und am Deckelträger angebrachte Führungsbolzen gebildet sein.

In jeder Führungsschiene 12 ist auch ein hinterer Lagerblock 26 verschiebbar angeordnet. Am hinteren Lagerblock 26 ist ein Rasthaken 28 vorgesehen, der in eine (nicht gezeigte) Aussparung der Führungsschiene 12 einrasten kann. Schwenkbar am hinteren Lagerblock 26 ist ein Verbindungsarm 30 angebracht, der auch schwenkbar am Deckelträger 20 angebracht ist. Der Verbindungsarm 30 erstreckt sich, wenn der Deckel sich in seiner geschlossenen Stellung befindet, etwa waagerecht.

In der Führungsschiene 12 ist auch ein Schlitten 32 verschiebbar angeordnet. Der Schlitten 32 greift mittels eines Führungsbügels 34 an einer Steuerrippe 36 des Deckelträgers 20 an. Um den Schlitten zu verstellen, können in an sich bekannter Weise Antriebskabel verwendet werden, die mit einem Elektromotor oder einer anderen geeigneten Antriebsvorrichtung verbunden sind.

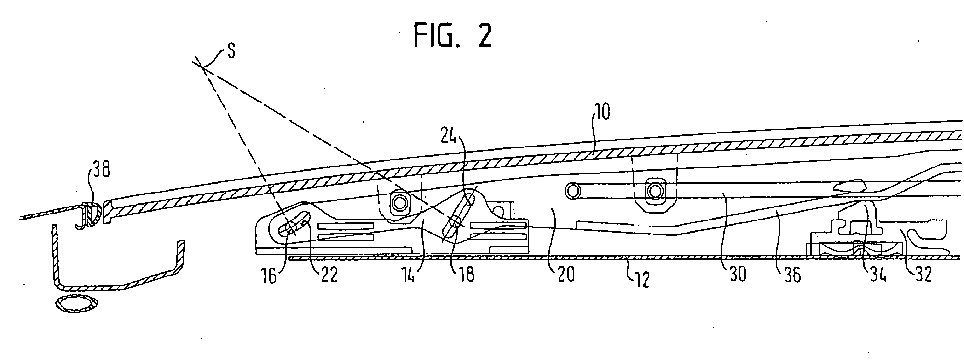

In Figur 2 ist das Schiebedachsystem in einem Zustand gezeigt, in welchem sich der Deckel 10 in seiner geschlossenen Stellung befindet. Der Schlitten 32 zusammen mit dem Führungsbügel 34 befindet sich etwa in einer Mittelstellung. Die Steuerrippe 36 kann, verallgemeinert ausgedrückt, als schräg von vorne unten nach hinten oben verlaufend angesehen werden. Wenn der Schlitten 32 ausgehend von der in Figur 2 gezeigten Stellung nach hinten bewegt wird, also bezüglich Figur 2 nach rechts, wird der Deckel abgesenkt und nach hinten in eine geöffnete Stellung gebracht, in welcher er teilweise oder vollständig unterhalb der Dachhaut 5 des Fahrzeugdaches 1 liegt. Im Verlauf dieser Bewegung wird der Rasthaken 28 vom Schlitten 32 nach oben bewegt, so daß der hintere Lagerblock 26 und mit diesem der Verbindungsarm 30, der Deckelträger 20 und der vordere Lagerblock 14 nach hinten mitgenommen werden. Dies ist an sich aus dem Stand der Technik bekannt, so daß hierauf nicht weiter eingegangen wird.

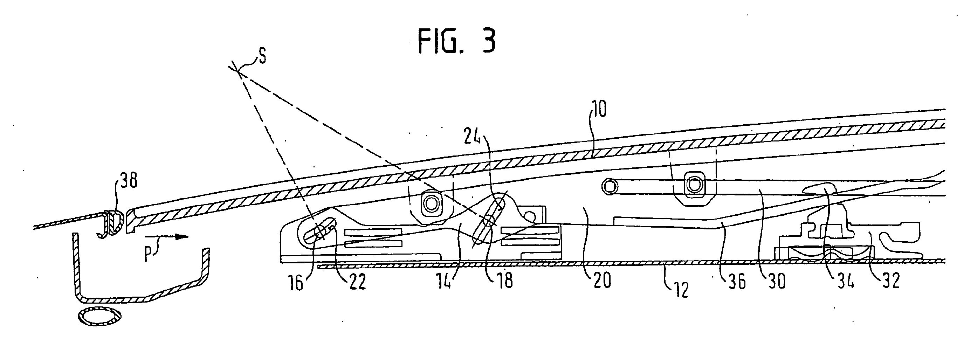

Um den Deckel in die Lüfterstellung zu verstellen, wird der Schlitten 32 ausgehend von der in Figur 2 gezeigten Stellung nach vorne bewegt. Dabei drückt der Führungsbügel 34 die Steuerrippe 36 nach oben (vergleiche die Positionen des Schlitten und des Deckelträgers in den Figuren 2 und 3), wodurch der Deckelträger 20 angehoben wird. In Längsrichtung ist der Deckelträger durch den Verbindungsarm 30 fixiert, der am hinteren Lagerblock 26 angelenkt ist, der wiederum mittels des Rasthakens 28 stationär in der Führungsschiene 12 gehalten ist. Da die Länge des Deckelträgers groß ist im Vergleich mit der vertikalen Schwenkbewegung des vorderen Endes des Verbindungsarmes, wird der Deckelträger nur geringfügig nach hinten gezogen, wenn er in Richtung der Lüfterstellung bewegt wird.

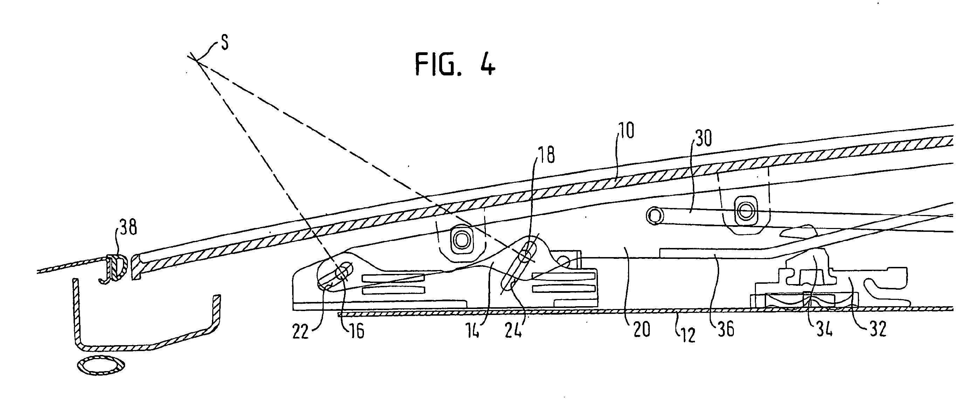

Wenn der Deckelträger 20 vom Führungsbügel 34 des Schlittens 32 angehoben wird, führt er eine Schwenkbewegung um einen virtuellen Schwenkpunkt aus, der definiert ist durch den Schnittpunkt einer Senkrechten auf die Bewegungsrichtungen, die von den beiden Kulissenführungen 16, 22 und 18, 24 vorgegeben werden. Der Schwenkpunkt ist in Figur 3 mit dem Bezugszeichen S angedeutet. Er liegt oberhalb des Deckels 10, jedoch hinter seiner vorderen Kante. Der Schwenkpunkt S kann auch als Momentanpol der Bewegung des Deckels 10 bezeichnet werden. Aufgrund seiner räumlichen Lage relativ zur Vorderkante des Deckels 10 führt die Vorderkante des Deckels, wenn der Deckelträger 20 vom Schlitten 32 angehoben wird, eine Bewegung etwa in der Richtung des Pfeils P von Figur 3 aus, also weg von einer Dichtung 38, die am Rand 7 der Öffnung in der Dachhaut 5 angeordnet ist. Es ist zu erkennen, daß sich die Vorderkante des Deckels 10 nach schräg hinten von der Dichtung 38 entfernt, wenn der Deckel 10 ausgehend von der geschlossenen Stellung in Richtung der Lüfterstellung bewegt wird. In Figur 4 ist eine Zwischenstellung gezeigt, in welcher der Deckel 10 über die leicht geöffnete Stellung von Figur 3 hinaus weiter hin zur Lüfterstellung bewegt wurde. Es ist zu sehen, daß sich die Vorderkante des Deckels 10 noch weiter von der Dichtung 38 gelöst hat. Durch die Veränderung der Bewegungsrichtungen und Bewegungspositionen in den Kulissenführungen hat sich der virtuelle Schwenkpunkt S verlagert. Er liegt nun höher und weiter vorne als in dem in Figur 3 gezeigten Zustand.

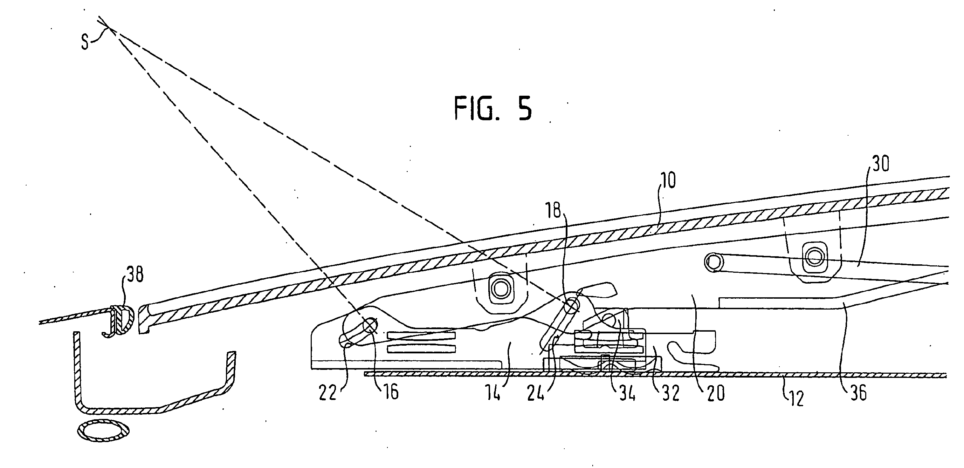

In Figur 5 ist der Deckel 10 in seiner maximal nach außen ausgestellten Lüfterstellung gezeigt. Die Vorderkante des Deckels 10 hat sich nun maximal von der Dichtung 38 gelöst. Es versteht sich jedoch von selbst, daß durch die geeignete Auswahl des virtuellen Schwenkpunkts S die Schwenkbewegung des Deckels 10 in der Praxis so eingestellt werden kann, daß die Vorderkante des Deckels die Dichtung 38 noch leicht berührt, wenn sich der Deckel in der Lüfterstellung befindet. Entscheidend ist, daß, anders als im Stand der Technik, die Vorderkante des Deckels 10 von der Dichtung 38 wegbewegt wird, wenn der Deckel 10 ausgehend von der geschlossenen Stellung hin zur Lüfterstellung verstellt wird. Selbstverständlich gelten die obigen Erläuterungen auch, wenn die Dichtung am Deckel und nicht am Fahrzeugdach angebracht ist.

Durch die geeignete Auswahl des virtuellen Schwenkpunktes kann die Bewegung des Deckels auch so eingestellt werden, daß der Mittelbereich der Vorderkante geringfügig abgesenkt wird, wenn der Deckel in die Lüfterstellung gebracht wird, während die seitlichen Bereiche der Vorderkante etwa auf derselben Höhe verharren. Dies ist von Vorteil bei einem Deckel mit in Querrichtung stark gekrümmter Vorderkante. Durch geeignete Auswahl des virtuellen Schwenkpunkts kann die Bewegung der Vorderkante des Deckels auch an andere Anforderungen angepaßt werden. Beispielsweise kann die Krümmung der vorderen Führungskulisse entlang ihrer Länge variiert werden, die Ausrichtung der beiden Führungskulissen geändert werden oder die hintere Führungskulisse gekrümmt ausgeführt werden, um die Lage und die Verschiebung des virtuellen Schwenkpunkts, wenn dieser in die Lüfterstellung gebracht wird, in der gewünschten Weise einzustellen.

### Bezugszeichenliste:

- 1:: Fahrzeugdach
- 5:: Dachhaut
- 7:: Rand
- 10:: Deckel
- 12:: Führungsschiene
- 14:: vorderer Lagerblock
- 16:: Führungsbolzen
- 18:: Führungsbolzen
- 20:: Deckelträger
- 22:: vordere Führungskulisse
- 24:: hintere Führungskulisse
- 26:: hinterer Lagerblock
- 28:: Rasthaken
- 30:: Verbindungsarm
- 32:: Schlitten
- 34:: Verbindungsbügel
- 36:: Steuerrippe

## Patentansprüche

1. Schiebedachsystem für ein Kraftfahrzeug, mit einer Führungsschiene (12), einem Deckelträger (20), einem Deckel (10), der an dem Deckelträger (20) angebracht ist, einem vorderen Lagerblock (14), an dem der Deckelträger (20) angelenkt ist, und einem Schlitten (32), der in der Führungsschiene (12) verschiebbar aufgenommen ist und an dem Deckelträger (20) angreift, wobei der Deckelträger (20) mit dem vorderen Lagerblock (14) durch zwei Kulissenführungen (16, 22; 18, 24) so gekoppelt ist, daß der Deckelträger (20) an dem vorderen Lagerblock (14) so angelenkt ist, daß er um einen virtuellen Schwenkpunkt (S) schwenkbar ist, **dadurch gekennzeichnet, dass** der virtuelle Schwenkpunkt (S) oberhalb des Deckels (10) liegt.

2. Schiebedachsystem nach Anspruch 1, **dadurch gekennzeichnet, daß** der virtuelle Schwenkpunkt (S), wenn der Deckel (10) aus einer geschlossenen Stellung in eine Lüfterstellung verstellt wird, wandert.

3. Schiebedachsystem nach einem der vorhergehenden Ansprüche, **dadurch gekennzeichnet, daß** eine vordere Kulissenführung (16, 22) eine gekrümmte Führungskulisse (22) aufweist.

4. Schiebedachsystem nach Anspruch 3, **dadurch gekennzeichnet, daß** der Krümmungsmittelpunkt der gekrümmten Führungskulisse (22) oberhalb des Deckels (10) liegt.

5. Schiebedachsystem nach einem der vorhergehenden Ansprüche, **dadurch gekennzeichnet, daß** eine hintere Kulissenführung (18, 24) eine geradlinige Führungskulisse (24) aufweist.

6. Schiebedachsystem nach Anspruch 5, **dadurch gekennzeichnet, daß** die hintere Führungskulisse (24) schräg von vorne und unten nach oben und hinten verläuft.

7. Schiebedachsystem nach einem der vorhergehenden Ansprüche, **dadurch gekennzeichnet, daß** jede Kulissenführung einen Führungsbolzen (16, 18) aufweist, der fest am vorderen Lagerblock (14) angebracht ist.

8. Schiebedachsystem nach einem der Ansprüche 1 bis 6, **dadurch gekennzeichnet, daß** jede Kulissenführung einen Führungsbolzen (16, 18) aufweist, der fest am Deckelträger (20) angebracht ist.

9. Schiebedachsystem nach einem der vorhergehenden Ansprüche, **dadurch gekennzeichnet, daß** der vordere Lagerblock (14) verschiebbar in der Führungsschiene (12) angeordnet ist, daß ein hinterer Lagerblock (26) vorgesehen ist, der mit dem Deckelträger (20) gekoppelt und ebenfalls in der Führungsschiene (12) verschiebbar ist, und daß ein Rasthaken (28) vorgesehen ist, der den hinteren Lagerblock (26) ortsfest in der Führungsschiene (12) festlegen kann.

10. Schiebedachsystem nach Anspruch 9, **dadurch gekennzeichnet, daß** der Deckelträger (20) mit dem hinteren Lagerblock (26) mittels eines Verbindungsarmes (30) gekoppelt ist, der schwenkbar am Deckelträger (20) und am hinteren Lagerblock (26) angelenkt ist.

## Claims

1. A sliding roof system for a motor vehicle, comprising a guide rail (12), a cover support (20), a cover (10) which is attached to the cover support (20), a front bearing block (14) to which the cover support (20) is articulated, and a carriage (32) which is received for sliding motion in the guide rail (12) and is engaged by the cover support (20), the cover support (20) being coupled to the front bearing block (14) by means of two slide guides (16, 22; 18, 24) such that the cover support (20) is articulated to the front bearing block (14) such that it can be swiveled around a virtual swiveling point (S), **characterized in that** the virtual swiveling point (S) lies above the cover (10).

2. The sliding roof system according to claim 1, **characterized in that** the virtual swiveling point (S) is displaced when the cover (10) is adjusted from a closed position to a venting position.

3. The sliding roof system according to any of the preceding claims, **characterized in that** a front slide guide (16, 22) has a curved guiding slot (22).

4. The sliding roof system according to claim 3, **characterized in that** the center of curvature of the curved guiding slot (22) lies above the cover (10).

5. The sliding roof system according to any of the preceding claims, **characterized in that** a rear slide guide (18, 24) has a rectilinear guiding slot (24).

6. The sliding roof system according to claim 5, **characterized in that** the rear guiding slot (24) extends obliquely from the bottom front upwards to the rear.

7. The sliding roof system according to any of the preceding claims, **characterized in that** each slide guide has a guide pin (16, 18) which is firmly attached to the front bearing block (14).

8. The sliding roof system according to any of claims 1 to 6, **characterized in that** each slide guide has a guide pin (16, 18) which is firmly attached to the cover support (20).

9. The sliding roof system according to any of the preceding claims, **characterized in that** the front bearing block (14) is arranged for sliding motion in the guide rail (12), that a rear bearing block (26) is provided which is coupled to the cover support (20) and is likewise adapted to slide in the guide rail (12), and that a latching hook (28) is provided which can immobilize the rear bearing block (26) in a fixed position in the guide rail (12).

10. The sliding roof system according to claim 9, **characterized in that** the cover support (20) is coupled to the rear bearing block (26) by means of a connecting arm (30) which is articulated for swiveling motion to the cover support (20) and to the rear bearing block (26).

## Revendications

1. Système de toit ouvrant pour véhicule automobile, comportant un rail de guidage (12), un support de couvercle (20), un couvercle (10) monté sur le support de couvercle (20), un bloc palier (14) avant sur lequel le support de couvercle (20) est articulé, et un chariot (32) qui est reçu de manière déplaçable dans le rail de guidage (12) et qui s'engage sur le support de couvercle (20), le support de couvercle (20) étant relié au bloc palier (14) avant par deux guidages à coulisse (16, 22 ; 18, 24) de sorte que le support de couvercle (20) soit articulé sur le bloc palier (14) avant de manière à pouvoir pivoter autour d'un point de pivotement (S) virtuel, **caractérisé en ce que** le point de pivotement (S) virtuel se trouve au-dessus du couvercle (10).

2. Système de toit ouvrant selon la revendication 1, **caractérisé en ce que** le point de pivotement (S) virtuel se déplace lorsque le couvercle (10) est ajusté d'une position fermée dans une position d'aération.

3. Système de toit ouvrant selon l'une des revendications précédentes, **caractérisé en ce qu'**un guidage à coulisse (16, 22) avant présente une coulisse de guidage (22) courbe.

4. Système de toit ouvrant selon la revendication 3, **caractérisé en ce que** le centre de courbure de la coulisse de guidage (22) courbe se trouve au-dessus du couvercle (10).

5. Système de toit ouvrant selon l'une des revendications précédentes, **caractérisé en ce qu'**un guidage à coulisse (18, 24) arrière présente une coulisse de guidage (24) rectiligne.

6. Système de toit ouvrant selon la revendication 5, **caractérisé en ce que** la coulisse de guidage (24) arrière s'étend en oblique depuis l'avant et le bas vers le haut et l'arrière.

7. Système de toit ouvrant selon l'une des revendications précédentes, **caractérisé en ce que** chaque guidage à coulisse présente un boulon de guidage (16, 18) qui est monté de manière solidaire sur le bloc palier (14) avant.

8. Système de toit ouvrant selon l'une des revendications 1 à 6, **caractérisé en ce que** chaque guidage à coulisse présente un boulon de guidage (16, 18) qui est monté de manière solidaire sur le support de couvercle (20).

9. Système de toit ouvrant selon l'une des revendications précédentes, **caractérisé en ce que** le bloc palier (14) avant est agencé déplaçable dans le rail de guidage (12), **en ce qu'**il est prévu un bloc palier (26) arrière qui est relié au support de couvercle (20) et est également déplaçable dans le rail de guidage (12), et **en ce qu'**il est prévu un crochet d'enclenchement (28) qui est apte à fixer le bloc palier (26) arrière de manière stationnaire dans le rail de guidage (12).

10. Système de toit ouvrant selon la revendication 9, **caractérisé en ce que** le support de couvercle (20) est relié au bloc palier (26) arrière au moyen d'un bras de raccordement (30) qui est articulé à pivotement sur le support de couvercle (20) et le bloc palier (26) arrière.
